# EUROPEAN PATENT APPLICATION

(11) **EP 1 459 911 A1**
(43) Date of publication of application: **22.09.2004**
(21) Application number: 04251355.6
(22) Date of filing: 10.03.2004
(51) Int. Cl.: B60C 23/04

(54) **Tag attachment for tires and method of attaching tags to tires**

(30) Priority: 19.03.2003 US 391879
(71) Applicant: MORGAN ADHESIVES COMPANY, Stow Ohio 44224 (US)
(72) Inventor: Dominak, Stephen L., Brecksville Ohio 44141 (US); Nettekoven, John K., Uniontown Ohio 44685 (US); McLean, Gerald R., Wadsworth Ohio 44281 (US); Holcroft, Georgina, Munroe Falls Ohio 44262 (US)
(74) Representative: Forsyth, Helen Jane

(57) **Abstract**

The present invention is a method of attaching a tag to the inner surface of a tire. Methods of mounting a tag on an inner surface of a tire include coating a tag or a premask film with a pressure sensitive adhesive on a side and adhering that side of the tag or premask to the inner surface of a tire. With the premask film, the tag is adhered to adhesive on the premask, normally after a release liner is removed. Similarly, direct mount of a tag with a pressure sensitive adhesive, the tire is cured after the tag is mounted, which allows the pressure sensitive adhesive on the tag to cure into the tire. The tire is ideally cured after attachment of the tag or premask film so the pressure sensitive adhesive strongly bonds to the inner surface of the tire.

## Description

### Background of the Invention

The present invention relates to tags attached to the inner surface of a tire and more particularly to a passive tracking tag that is attached with a pressure sensitive adhesive to the inner surface of a tire before the tire is cured. Also, the invention includes methods of attaching such tags to the inner surface of a tire.

Tags allow users to store, identify, or classify information, and the term "tags" is intended to broadly include all foreseeable equivalents. In an application for use on tires, tags can be used for inventory management and for tracking work in progress. Tags on tires can be used to identify, control inventory, keep records, maintain warranty information, and assist in identifying any potential manufacturing problems. Automotive manufacturers must track or associate the tires with the vehicle. In an assembly plant that may produce more than one car, automakers want to track tires in the plant to coordinate delivery for proper assembly. The U.S. Department of Transportation requires a code including the week, year, and plant location of tire manufacture tied to the vehicle. Beyond a barcode tag, RFID (Radio Frequency Identification) tags, for example, allow users to store and modify distinct information, read multiple objects without human intervention, and track moving objects in an automated dynamic environment. Integrated with readers, other hardware, and systems, such tags can be used to meet tracking, data, and inventory needs.

RFID tags and other tags are available in numerous shapes and forms. RFID tags include antennas that come in a variety of shapes and frequencies generally designed for frequencies from 125KHz and higher. Integrated circuits are normally attached to antennas. The antennas allow the excitation of the chip, providing power and the transmission of data. The antennas combined with the chips are known as "inlets". The term "inlet" is broadly used to include chips and antennas which meet specific protocols. Finally, a means for mounting inlets may include appropriate adhesives which may be combined with graphics or laminates to produce what is known as a "tag". The capabilities of certain pressure sensitive adhesives are well suited for mounting tags on tires.

A reader can transmit information from a tag to a computer. Data can be read, written or rewritten to a tag via radio frequency. Systems for writing and reading tags are known in the art.

Tags can be hidden or placed on a surface that would not interfere with use or the manufacturing processes. Tags can record temperature and other environmental factors, but RFID type tags can also avoid adverse environmental factors by being remotely placed. With non-contact, non-line of sight reading, the position of tags can be more versatile for reading and writing information.

Discrete positioning of the RFID tag is one feature that distinguishes RFID type tags from traditional visual tracking methods. As such, discrete positioning brings new problems, such as attachment to the inner surface of a tire. The inner surface is sometimes called the inner liner. The inner surface of a tire is a difficult environment to adhere a tag.

Prior art methods include making tires with passive integrated circuits embedded in the body of a tire and self-powered circuits positioned external to a tire, such as at the valve stem. Also, elastomeric patches can encapsulate the tag.

U.S. Patent 5,483,827 shows a transponder 10 mounted to the inner surface of a tire 60 in Figure 8. The transponder is housed in an encapsulating medium 7, such as cured rubber for compatibility with a vehicle tire. Per column 7 of that patent, an elastomeric patch or membrane 59 is mounted over the transponder 10 and sealingly joined to the inner liner to fixedly mount the transponder 10 in registry with the tire 60. This method can be used to mount a bulky device, and the disclosure specifically distinguishes passive integrated circuit transponders, which generally would be thinner. Passive tags have no source of electrical energy and can be activated from external sources, such as a means for interrogating. An interrogation signal can be rectified by an integrated circuit transponder that uses the signal as a source of energy. Similarly, U.S. Patent 5,971,046 shows a method of bonding an active tag to a patch and then the patch to a tire. A rigid tag assembly encapsulates the electronic monitoring device.

U.S. Patent 5,218,861 shows a device located within the structure of a pneumatic tire between the ply 32 and the innerliner 30 using a primer and topcoat to adhere the device in manufacturing. Also, in column 7, that patent discloses a tire patch for a tire that has already been manufactured. Similarly, U.S. Patent 4,911,217 shows a device within the structure of a tire. Also, it describes inserting a "credit card" type device inside of an already cured pneumatic tire by adhering the device to the innerliner of a tire with a patch material.

Prior art tags typically were also attached to the outer surface of a tire, in part, because the composition of the tire and the critical nature of the inner liner to maintain air pressure made the outer surface a better place to mount a tag. Attempts to mount tags to the inner surface of a tire have had major limitations. An approach noted above includes inserting a tag between layers of rubber in an uncured tire. This approach adds a non-rubber product into the tire, which may increase the potential for failure of the tire, such as separation of laminated layers or migration in either direction which can eventually puncture the tire. The method disclosed herein avoids the insertion of a wire, antenna and chip into the sidewall of a tire.

Other limitations of attaching tags to the inner surface of a tire are based on the characteristics and properties of the inner surface of a tire and the manufacturing process. It is preferred to bond the tag to the tire when the inner liner is most receptive to the adhesion. This is typically before the vulcanization process occurs in the molding or forming process. Typical adhesives would not reliably hold a tag to the cured inner surface of a tire. Special adhesives are required to adhere to the oil or wax common in the cured inner surface layer of a tire. The continuity of the inner surface is critical to keeping a tire inflated. Large devices or tags that may separate from the inner surface could cause damage to the inner surface of the tire. Proper adhesion of the tag is critical with respect to an inner surface of a tire. The mounting system must be capable of withstanding the riggers of the manufacturing process. This includes elevated temperatures and pressures.

The system must be read from a distance. This is a function of the system and the tag design. The tag design must also withstand tire shipment, handling, assembly and mounting of the tag. The location and design of the tag within the tire is also critical. It is known that the tire will be exposed to static or dynamic loads or forces. The design of the tag must be selected to accommodate these forces including flexing, bending, centrifugal forces, deflection, and impact. Further the tag design can include elements such as thin, durable, strong and flexible characteristics.

It is therefore an object of the present invention to provide a tag that is attached with a pressure sensitive adhesive to the inner surface of a tire before the tire is cured.

This and other objects and advantages of the invention will be apparent from the following description, the accompanying drawings, and the appended claims.

### Summary of the Invention

The present invention is a method of installing or mounting a tag on a tire and the particular tag for doing so. The methods of installing or mounting a tag include bonding a tag containing components such as inlets or chips and RFID antennas to the inner surface of a tire, which is more difficult than to the outer surface of a tire. The use of pressure sensitive adhesives makes the mounting of a tag a more simple application.

The method of attaching a tag is ideally bonded into the tire manufacturing process for both tracking during tire manufacture and for strong adhesion of the tag. Use of a pressure sensitive adhesive is an improvement over embedding a tag, encapsulating it within a tire or patch, or using epoxies or two-stage adhesives. The methods of attaching a tag using specific pressure sensitive adhesives fall into three categories.

A first method uses a pressure sensitive adhesive mounting a tag in a premask process. A film with at least one release liner is cut in a particular shape, normally larger than the tag to be mounted. The secondary release liner, if present, covers the pressure sensitive adhesive and is removed to expose the underlying adhesive. The pressure sensitive adhesive (PSA) of the premask is attached to the inner surface of a tire during manufacturing before the tire is cured. When the tire is cured, the premask adhesive bonds to the inner surface of the tire. The primary release liner remains on the premask adhesive covering the pressure sensitive adhesive until the tag is mounted. This primary release liner is removed from the premask adhesive. The tag may or may not have a PSA and or liner. If the tag, with or without the adhesive, is mated with the adhesive of the premask, it can be mated with light pressure. Again the inlet can be coated or laminated with a pressure sensitive adhesive, which may be covered with a release liner for ease of transport or manufacturing. Ideally, the pressure sensitive adhesive of the premask will securely bond with the tag, including the complementary pressure sensitive adhesive of the tag if present so that the tag is securely mounted to the tire. Alternately, the tag without an adhesive can be mounted on the pressure sensitive adhesive of the premask. An advantage of the premask process is the tag does not need to be designed to withstand the tire curing process. Another method of pressure sensitive adhesive mounting a tag includes direct mount of the tag to the tire. A tag is coated or laminated with a pressure sensitive adhesive, which may be covered with a release liner for ease of transport or manufacturing. The release liner is removed from the tag when the tag is ready to be attached on the inner surface of an uncured tire. To expose the pressure sensitive adhesive, the release liner is removed and then the tag can be attached with light pressure to the inside of the tire. After the tag is attached, the tire is cured, which allows the pressure sensitive adhesive on the tag to bond into the tire. The pressure sensitive adhesive will secure the tag to the inner surface of the tire. This design requires the tag to withstand the tire cure process, which can include chip design, lamination methods, die attachment methods and material selection.

Another method of pressure sensitive adhesive mounting a tag includes direct mounting of the tag to the inner liner with a rubber cover with an improved adhesive. Ideally, a thin, light, flexible, passive tag is used to minimize the size of the patch needed in this method, but encapsulation is also known per U.S. Patent 5,483,827 for mounting larger devices, and patches are known. The tag is attached to a piece or patch of uncured rubber or is encapsulated. The bulk of the tag dictates the size of the patch or encapsulation. Ideally, a pressure sensitive adhesive is used to attach the tag to the patch, as well as to attach the patch and tag combination to the tire. However, this is not a requirement for mounting, but a distinction from other methods. Adhesive on one surface can both attach the tag to the patch, and then the remaining exposed adhesive can attach the patch and tag combination to the tire. Based on using an improved adhesive, the uncured rubber patch is attached to a tire and then cured into the tire.

It has been found that curing an adhesive into the tire will aid in the adhesion of a tag. The curing with an adhesive can be used with any of the methods just described. Also, curing a tire using an adhesive before processing may eliminate any adhesive residue left on a tire.

Because of the nature of tires, tags suitable for the present methods should be light, thin and flexible. The tag, itself, is ideally flexible, extremely thin and light weight. If attached before a tire is cured, the tag must be able to withstand the process of making a tire. The tag is designed to maximize the read range and is preferably durable to last the tire life cycle. The placement of the tag in the tire can affect the read range, adhesion and tag life. Preferred RFID tags include inlets, and a means for mounting finished tags that may include a variety of adhesives, which are ideally pressure sensitive. A modified acrylic pressure sensitive adhesive with a grafted polymer and tackifier can improve low surface energy and maintain adhesion properties at relevant temperatures. An alternative is a rubber based pressure sensitive adhesive that can withstand the high temperature of the curing process. The rubber provides good flexing properties. In a preferred embodiment, a pressure sensitive adhesive can hold components together as well as mount the tag to a tire.

### Brief Description of the Drawings

Figure 1 is a perspective view of a mounted tag according to the present invention.
Figure 2 shows one possible tag subassembly without a chip and a chip-interposer that can be applied to the tag subassembly.
Figure 3 shows a premask disposed on a tire with the release liner partially removed.
Figure 4 shows the cross section of a tag secured to a tire using a premask.

### Detailed Description of the Invention

While the present invention will be described fully hereinafter with reference to the accompanying drawings, in which particular embodiments are shown, it is to be understood at the outset that persons skilled in the art may modify the methods and tags herein described while still achieving the desired result of this invention. Accordingly, the description that follows is to be understood as a broad informative disclosure directed to persons skilled in the appropriate art and not as limitations of the present invention.

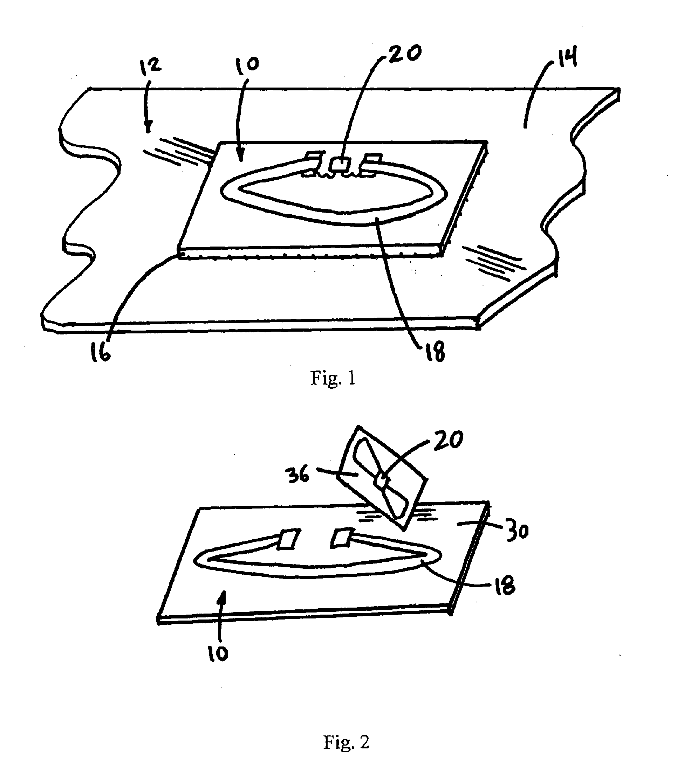

Figure 1 shows a tag 10 constructed according to the present invention and disposed on a tire 12 on the tires inner surface 14. In this preferred construction, the tag 10 has a substrate film 16 and an antenna 18 and a thin semiconducting material having electrical characteristics (i.e. a chip) 20. Item 20 can be various electronic components or integrated circuits known in the art or reasonably foreseeable. The tag 10 is ideally flexible, extremely thin, and light weight. If attached before a tire 12 is cured, the tag 10 must be able to withstand the process of a making a tire, such as vulcanization with temperatures of approximately 350 degrees Fahrenheit and the pressure associated with the process.

Figure 2 shows a tag subassembly 30 without a chip. Sometimes the chip is directly mounted to the antenna, and the chip interposer is not used. Ideally, an antenna 18 is part of the tag subassembly 30. A chip-interposer 36 can be applied to the tag subassembly 30 with or without an electrically conductive pressure sensitive adhesive based on the chip-interposer design. A suitable chip-interposer 36 is described in European Patent application 00302389.2. The tag subassembly 30 can accept a chip-interposer 36 to form a complete RFID tag. The chip-interposer 36 can be applied before the tag subassembly 30 is mounted on a tire 12, but also the chip-interposer 36 can be attached to the tag subassembly 30 after the tire is cured. This may avoid harsh conditions for sensitive chips. If the chip-interposer 36 is attached to the tag subassembly 30 before the combined tag is mounted on the inner surface 14 of a tire 12, the adhesive can be on either side of the tag subassembly 30. If the chip-interposer 36 is attached after mounting the tag subassembly 30 to the inner surface 14 of the tire 12, the adhesive would be placed on the surface of the tag subassembly 30 opposite the side with the antenna 18 so that the chip-interposer 36 can be attached to the antenna 18.

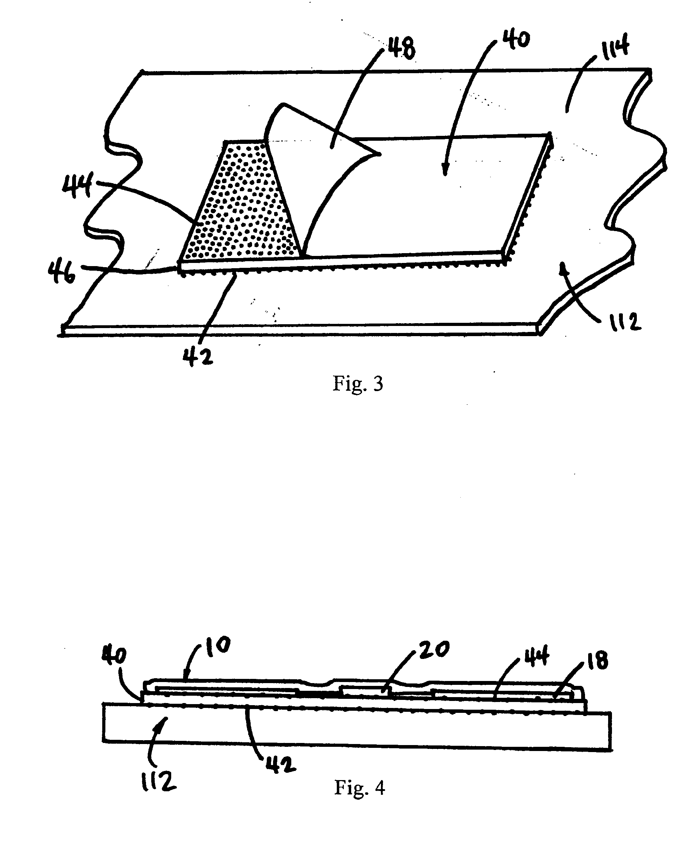

Figure 3 shows a premask 40 disposed on a tire 112. A premask 40 before disposition on a tire 112 can have pressure sensitive adhesive 42 and 44 on both sides of a substrate 46. The pressure sensitive adhesive 42 on a first side of a substrate 46 can be applied to the inner surface 114 of a tire 112 preferably before the tire 112 is cured. Ideally, the same pressure sensitive adhesive is used on both sides, but this is not a requirement. Through manufacture of the tire 112, a release liner 48 covers the pressure sensitive adhesive 44. The premask 40 can also be constructed without the adhesive and the substrate. Adhesive 44 is in direct contact with the tire 112. After removal of the release liner 48 exposing the pressure sensitive adhesive 44 on the second side, a tag 10 can be attached to the exposed adhesive of the premask 40. Ideally, the tag 10 will have a complementary pressure sensitive adhesive to bond with the pressure sensitive adhesive 44 on a second side of the premask 40, but the tag 10 can be mounted using only the pressure sensitive adhesive 44 on one side. Figure 4 shows the cross section of a tag 10 secured to a tire 112 using a premask 40 with pressure sensitive adhesive 42 and 44 on each side. In Figure 4, both release liners on the premask have been removed to allow the adhesives to bond and mount the tag 10.

The substrate for a tag 10 or premask 40 can be paper or a plastic film, such as polyester, polyethylene, nylon, polypropylene, vinyl or foam. The substrate should be thin and flexible. The substrate of a tag must be flexible, but it should not distort or break because an attached circuit and antenna must remain intact to operate. Excessive elongation may also fracture components. The substrate must be durable enough to withstand temperatures, compression, and stress associated with the manufacture of a tire.

Polyester has proven one of the preferred films for a substrate because it can handle the flexing of a tire while being very thin but able to withstand processing. Polyester maintains superior performance in terms of flexibility, heat resistance, elongation and dimensional stability on an unstable surface of a tire. A polyester film can be less than 2 mils, and is preferably as thin as 0.5 mil.

The antenna 18 should have no sharp edges that may cut into the tire or tag. The antenna 18 should also be flexible, thin and strong. As an option, an antenna may be copper plated to make it last longer. An antenna can also be less than 2 mils thick. The component 20 can be various types of integrated circuits, electronic components, and chips that are known in the art. A complete tag may be less than 5 mils thick, and ideally much thinner.

A preferred rubber base pressure sensitive adhesive, the GS series of adhesives or a Butyl rubber interface, is an adhesive with good flexing properties. A modified acrylic pressure sensitive adhesive with a grafted polymer and tackifier can improve low surface energy and maintain adhesion properties at relevant temperatures. Particular pressure sensitive adhesives that are modified acrylic include IF207X series or MACtac IF209X series. In a preferred embodiment, a pressure sensitive adhesive can hold components together as well as mount the tag to a tire.

A first method of pressure sensitive adhesive mounting a tag 10 includes a premask process. A substrate with adhesive on both sides covered by at least one release liner is cut in a particular shape, if present, that is compatible with and normally larger than the tag 10 to be mounted. A secondary release liner is removed from the premask 40 to expose the adhesive, and the premask 40 is attached to the inner surface 114 of a tire 112 during manufacturing, preferably before the tire 112 is cured. When the tire 112 is cured, the premask adhesive on a first side of the premask 40 bonds into the inner surface of the tire 112. Curing an adhesive into the tire 112 will aid in the adhesion. The second or primary release liner 48 remains on the premask 40 mounted on the tire 112 covering the pressure sensitive adhesive until the tag 10 is mounted. The second release liner 48 is removed from the premask 40, and a release liner is removed, if any, from a preferred coated tag 10 so the tag 10 and premask 40 can be mated together with light pressure. A tag 10 can be adapted to adhere to the premask 40 or preferably can be coated or laminated with a pressure sensitive adhesive, which may be covered with a tag release liner for ease of transport or manufacturing. The pressure sensitive adhesive 44 of the premask 40 will securely bond with the tag 10 or the complementary pressure sensitive adhesive of the tag 10 so that the tag 10 is securely mounted to the tire 112.

While above-mentioned features of this invention and the manner of obtaining them may be apparent to understand a premask method, a method of attaching a tag to the inner surface of a tire may be best understood by reference to the following description taken in conjunction with the above identified features.

A method of mounting a tag to an inner surface of a tire including the steps of:
obtaining materials to be made into a tire;
making a premask with a pressure sensitive adhesive on a first side of the premask; optionally applying a pressure sensitive adhesive to a second side of a premask;
cutting the premask in a shape that is compatible with and normally larger than the tag to be mounted;
if a pressure sensitive adhesive is applied to a second side of the premask, applying a release liner over the pressure sensitive adhesive on the second side;
adhering the first side of the premask to a surface that will be the inner surface of the tire;
curing the tire after the pressure sensitive adhesive is adhered to the tire;
if a release liner was applied over the pressure sensitive adhesive on the second side; removing the release liner before the tag is mounted on the premask; and
mounting the tag on the premask.

Another method of pressure sensitive adhesive mounting a tag 10 includes a direct mount. A tag 10 is coated or laminated with a pressure sensitive adhesive, which may be covered with a release liner for ease of transport or manufacturing. A tag 10 including an antenna is ideally less than 50 mils thick. The release liner can be removed from the tag 10 when the tag 10 is ready to be attached on the inner surface 14 of the tire 12. After the tag 10 is attached, the tire 12 is cured, which allows the pressure sensitive adhesive on the tag 10 to cure into the tire 12. The pressure sensitive adhesive will secure the tag 10 to the inner surface 14 of the tire 12.

In a variation of these methods, the tag 10 can be applied without a chip or inlet. A chip can be applied to the tag subassembly 30 that already includes the antenna 18 and electrical contacts by attaching a chip-interposer 36 to the tag subassembly 30. The chip-interposer 36 can be applied to the tag subassembly 30 with a conductive pressure sensitive adhesive. The chip-interposer 36 can be applied at any time during the production of the tire, but a significant purpose would be to allow attachment of the chip after manufacture of the tire. This alternative can be used if a chip is extremely sensitive to heat or other conditions of curing a tire.

The placement of a tag 10 on the inner surface 14 of a tire 12 is important given the dynamics of the forces of the tire as well as the ability to read and write for some frequencies. Placement of a tag 10 on a tire 12 should be made to minimize interference with signals. For example, for certain tags operating at specific frequencies, the tag should not be placed near the rim or the wheel. Similarly, in certain instances, the tag should not be placed too close to the steel belts in a tire. Determining whether there is interference with the location of placement of a tag is important in considering placement of the tag. Avoiding any interference with the specific frequency of the tag based on other components of a tire will maximize operation of the tag.

Although a preferred embodiment of the invention is illustrated and described in connection with a particular type of components, it can be adapted for use with a variety of tags and tires. Other embodiments and equivalent tags and methods are envisioned within the scope of the invention. Various features of the invention have been particularly shown and described in connection with the illustrated embodiments of the invention, however, it must be understood that these particular embodiments merely illustrate and that the invention is to be given its fullest interpretation within the terms of the appended claims.

## Claims

1. A method of mounting a tag to an inner surface of a tire including the steps of:
obtaining materials to be made into a tire;
making a premask with a pressure sensitive adhesive on a first side of the premask;
cutting the premask in a shape that is compatible with the tag to be mounted;
adhering the first side of the premask to a surface that will be the inner surface of the tire;
curing the tire after the pressure sensitive adhesive is adhered to the inner surface; and
mounting the tag on the premask.

2. The method of claim 1 including an additional step of coating the tag with a complementary adhesive and wherein the step of mounting the tag on the premask includes mating the premask with the complementary adhesive of the tag and then applying pressure to the tag, wherein the premask will securely bond with the complementary adhesive of the tag so that the tag is securely mounted to the inner surface of the tire.

3. The method of claim 1 wherein the pressure sensitive adhesive is a rubber based adhesive.

4. The method of claim 1 wherein the pressure sensitive adhesive is a modified acrylic pressure sensitive adhesive including a grafted polymer.

5. The method of claim 1 including the additional steps of :
applying the pressure sensitive adhesive to a second side of the premask;
applying a release liner over the pressure sensitive adhesive on the second side; and
removing the release liner before the tag is mounted on the premask.

6. The method of claim 5 including an additional step of coating the tag with a complementary adhesive and wherein the step of mounting the tag on the premask includes mating the pressure sensitive adhesive of the premask with the complementary adhesive of the tag and then applying pressure to the tag, wherein the pressure sensitive adhesive of the second side of the premask will securely bond with the complementary adhesive of the tag so that the tag is securely mounted to the inner surface of the tire.

7. The method of claim 1 wherein the step of cutting the premask includes cutting the premask in a shape slightly larger than the tag to be mounted.

8. The method of claim 1 wherein the tag is a RFID tag.

9. The method of claim 1 wherein the tag is less than five mils thick.

10. The method of claim 1 wherein the tag includes the antenna and electrical contacts, and comprises an additional step of applying a chip-interposer to the tag.

11. The method of claim 1 wherein the premask has a substrate film that is less than two mils thick.

12. A method of mounting a tag directly on an inner surface of a tire comprising the steps of:
coating the tag with a pressure sensitive adhesive on a side;
attaching the adhesive-coated side of the tag to the inner surface of the uncured tire;
curing the tire with the tag attached to allow the pressure sensitive adhesive to cure into the tire.

13. The method of claim 12 wherein the pressure sensitive adhesive is a rubber based adhesive.

14. The method of claim 12 wherein the pressure sensitive adhesive is a modified acrylic based pressure sensitive adhesive.

15. The method of claim 12 wherein the tag is a RFID tag.

16. The method of claim 12 wherein the tag is less than 50 mils thick.

17. The method of claim 12 wherein the tag includes the antenna and electrical contacts, and comprises an additional step of applying a chip-interposer to the tag.

18. The method of claim 12 wherein the tag includes a polyester film less than two mils thick.
